(19) Europäisches Patentamt

European Patent Office

Office européen des brevets

(11) **EP 1 690 845 A1**

(12) **EUROPEAN PATENT APPLICATION**
published in accordance with Art. 158(3) EPC

(43) Date of publication:
**16.08.2006 Bulletin 2006/33**

(21) Application number: **04793332.0**

(22) Date of filing: **28.10.2004**

(51) Int Cl.:
***C04B 37/00*** (2006.01)

(86) International application number:
**PCT/JP2004/016352**

(87) International publication number:
**WO 2005/042436 (12.05.2005 Gazette 2005/19)**

(84) Designated Contracting States:
**DE GB IT**

(30) Priority: **31.10.2003 JP 2003373074**

(71) Applicant: **TOKUYAMA CORPORATION**
**Syunan-shi, Yamaguchi 745-8648 (JP)**

(72) Inventors:
• **ESAKI, Tatsuo,**
**c/o Tokuyama Corporation**
**Shunan-shi,**
**Yamaguchi 7458648 (JP)**

• **SATO, Hideki,**
**c/o Tokuyama Corporation**
**Shunan-shi,**
**Yamaguchi 7458648 (JP)**
• **AZUMA, Masanobu,**
**c/o Tokuyama Corporation**
**Shunan-shi,**
**Yamaguchi 7458648 (JP)**

(74) Representative: **Cresswell, Thomas Anthony**
**J.A. KEMP & CO.**
**14 South Square**
**Gray's Inn**
**London WC1R 5JJ (GB)**

(54) **ALUMINUM NITRIDE JOINED ARTICLE AND METHOD FOR MANUFACTURE THEREOF**

(57)     An aluminum nitride junction body useful as an electrostatic chuck for holding a semiconductor wafer in an apparatus for producing a semiconductor, comprising aluminum nitride sintered plates joined together via a sintered metal layer. When used in the above application, the junction structure works to uniformly adsorb the semiconductor wafer. The aluminum nitride junction body is obtained by joining aluminum nitride sintered plates 1-a and 1-b together having a sintered metal layer 2 of tungsten or molybdenum of a thickness of 15 to 100 μm formed on at least a portion of the junction surface thereof, the sintered metal layer having a sheet resistivity of not larger than 1 Ω/□ and warping by not more than 100 μ/100 mm.

Fig. 1

EP 1 690 845 A1

**Description**

(Technical Field)

The present invention relates to an aluminum nitride junction body obtained by interposing a sintered metal layer between the aluminum nitride sintered plates which are joined together. More specifically, the invention relates to an aluminum nitride junction body preferably used as an electrostatic chuck for placing a semiconductor wafer thereon for treatment in a process for producing a semiconductor and to a method of producing the same.

(Background Art)

Accompanying the formation of ever fine semiconductor chips on a semiconductor wafer, a dry process has now been chiefly employed in the step of deposition on a semiconductor wafer such as a silicon wafer and in the step of etching. Besides, the size of the semiconductor wafer is ever increasing for improving the yield and for decreasing the production cost of semiconductor chips. Under the above circumstances, an electrostatic chuck has now been used as a support plate for placing a semiconductor wafer thereon in the process for producing a semiconductor. The electrostatic chuck is capable of holding the semiconductor wafer by electrostatically adsorbing the whole back surface thereof making it possible to effect the deposition on the whole surfaces of the semiconductor wafer that is to be treated and to conduct the etching treatment.

Here, the dry process in the step of producing the semiconductor, in many cases, uses a halogen type corrosive gas such as the one of the chlorine type or the fluorine type that is excited with a plasma as an etching gas and as a gass for cleaning the interior of the vacuum container after the deposition treatment. Depending on the processing conditions, further, a quick heating or cooling may often be effected. For the semiconductor wafers of large sizes, further, a thin film must be uniformly deposited maintaining good precision and it is, further, required to uniformly etch various thin films of large areas formed on the semiconductor wafer. Therefore, the electrostatic chuck must have excellent corrosion resistance against halogen type corrosive gases excited with a plasma and excellent resistance against thermal shock yet maintaining a high heat conductivity.

The electrostatic chuck is usually constructed by forming a sintered metal layer of a high-melting metal as an electrode on a ceramic substrate and joining another ceramic substrate that works as a dielectric layer thereon. A semiconductor wafer is placed on the ceramic substrate. To meet the above request, therefore, the aluminum nitride sintered body is used as the ceramic substrate.

In the above electrostatic chuck, further, maintaining the distance uniform from the contact surface between the semiconductor wafer and the ceramic substrate to the sintered metal layer (i.e., maintaining the thickness of the dielectric layer uniform), is necessary for uniformly adsorbing the whole back surface of the semiconductor wafer to stably hold it.

In order to avoid the problem of dimensional change at the time of sintering, the aluminum nitride junction body having a sintered metal layer formed between two pieces of aluminum nitride sintered plates, has heretofore been produced by, first, preparing aluminum nitride sintered plates, applying an electrically conducting paste onto the surface of one sintered plate followed by firing to form a sintered metal layer and, then, joining another sintered plate thereto via an adhesive.

In connection with the above production method, the following prior arts A to C propose that, in order to form a sintered metal layer having a relatively large thickness (about 15 to about 100 $\mu$m), a groove is formed in the sintered substrate and the groove is filled with an electrically conducting paste to form a layer of a sintered metal. There have further been reported that the above means makes it possible to obtain an aluminum nitride junction body forming a layer of a sintered metal maintaining a uniform distance from the surface of the plate while suppressing the warping of the sintered metal layer.

Prior Art A: Japanese Unexamined Patent Publication (Kokai) No. 2002-57207
Prior Art B: Japanese Unexamined Patent Publication (Kokai) No. 2002-176096
Prior Art C: Japanese Unexamined Patent Publication (Kokai) No. 2002-173378

In the electrostatic chuck, a high voltage of, usually, not lower than 1 kV is applied to the sintered metal layer, and the dielectric layer (ceramic substrate) produces an electrostatic adsorbing force. In the latest semiconductor device, further, the electrostatic chuck is placed in an electrically severe environment in a vacuum chamber in the step of dry etching and in the step of CVD. That is, a halogen type corrosive gas or a reaction gas is introduced into the vacuum chamber, and a high frequency of, for example, 13.56 MHz is applied with a high voltage of 2 to 3 kV to generate a plasma. In order to firmly hold the semiconductor wafer by adsorption, therefore, a high DC voltage is applied to the electrostatic chuck (sintered metal layer).

When the aluminum nitride junction body is to be used as an electrostatic chuck, therefore, the sintered metal layer must have a very high electric conductivity. However, the aluminum nitride junction body obtained by the above method involves a problem in that the sintered metal layer has a low electric conductivity. That is, when the electric conductivity is low, a large potential difference occurs in the direction of a plane of the sintered metal layer due to the resistance, whereby the electrostatic adsorbing force becomes uneven arousing a problem in that dielectric breakdown occurs in the periphery of the sintered metal layer.

In order to improve the electric conductivity of the sintered metal layer, therefore, it can be contrived to increase the density of the sintered metal layer by using an electrically conducting paste containing metal particles having small particle sizes. When there is used the electrically conducting paste containing metal particles of small particle sizes, however, there takes place the shrinking to a conspicuous degree at the time of firing. When the aluminum nitride junction body is produced by the above-mentioned production method, therefore, the sintered metal layer tends to be warped. When a recessed portion such as a groove is formed in the surface of the AIN sintered plate and the sintered metal layer is formed maintaining a thickness of as relatively great as 15 to 100 $\mu$m, in particular, the obtained junction body warps to a conspicuous degree.

Besides, the aluminum nitride junction body obtained by the conventional method involves a problem of low junction strength between the sintered metal layer and the aluminum nitride sintered plate.

(Disclosure of the Invention)

It is therefore an object of the present invention to provide an aluminum nitride junction body incorporating a sintered metal layer having a relatively large thickness and a high electric conduction, suppressing the occurrence of warping to a very small degree, featuring a high junction strength between the sintered metal layer and the plate, and being suited for use as an electrostatic chuck, and a method of producing the same.

In order to solve the above problems, the present inventors have conducted keen study. As a result, the inventors discovered that; by filling an electrically conducting paste which contains, as a conductor component, metal particles having particular small particle sizes into a recessed portion formed in the surface of an aluminum nitride sintered plate, laminating another aluminum nitride sintered plate on the aluminum nitride sintered plate via a predetermined adhesive layer, conducting the dewaxing and sintering in two steps, it can be obtained an aluminum nitride junction body in which a sintered metal layer has a very low sheet resistivity, the warping of the sintered metal layer is suppressed to a very small degree, and a junction strength between the sintered metal layer and the sintered plate is high.

That is, according to the present invention, there is provided an aluminum nitride junction body comprising two pieces of aluminum nitride sintered plates joined to each other, and a sintered metal layer of tungsten or molybdenum formed on a junction surface thereof, said sintered metal layer having a thickness of 15 to 100 $\mu$m, wherein a sheet resistivity of the sintered metal layer is not larger than 1 $\Omega/\square$, warping of the sintered metal layer is suppressed to be not larger than 100 $\mu$m/100 mm, and a shear strength between the sintered metal layer and the aluminum nitride sintered plate on the junction surface is not smaller than 4 kg/mm$^2$.

In the junction body of the invention, it is desired that the area ratio of the sintered metal layer on the junction surface is in a range of 50 to 90%.

The invention further provides a method of producing an aluminum nitride junction body comprising the steps of:

providing two pieces of aluminum nitride sintered plates;
forming a recessed portion in a surface of one aluminum nitride sintered plate;
charging an electrically conducting paste containing, as a conductor component, a tungsten powder or a molybdenum powder having an average particle size ($D_{50}$) of not larger than 3.5 $\mu$m into the recessed portion;
forming an adhesive layer by applying an adhesive paste containing aluminum nitride as an adhesive component onto the whole surface of the aluminum nitride sintered plate charged with the electrically conducting paste;
dewaxing the electrically conducting paste and the adhesive paste;
effecting a primary sintering while contacting the other aluminum nitride sintered plate onto the surface where the adhesive layer is formed of the aluminum nitride sintered plate with a pressure of 0.5 to 10 MPa at a temperature of 1600 to 1700˚C for 0.5 to 4 hours; and
effecting a secondary sintering at a temperature of 1800 to 1900˚C for 2 to 8 hours following the primary sintering.

In the above production method, it is desired that the electrically conducting paste is charged into the recessed portion in an amount, calculated as a solid component, of 1.05 to 1.5 times as great as the volume of the recessed portion.

The aluminum nitride (AIN) junction body of the invention permits the sintered metal layer to be warped little, and is preferably used, particularly, as an electrostatic chuck to uniformly hold the whole back surface of the semiconductor wafer by adsorption.

Further, the sintered metal layer incorporated therein is a dense composition having a sheet resistivity of not larger than 1 Ω/□. Therefore, the sintered metal layer exhibits a very high electric conduction as compared to the conventional AlN junction bodies. The invention further features a very high shear strength between the sintered metal layer and the AlN sintered plate on the junction surface. Therefore, when used as an electrostatic chuck, the AlN junction body of the invention suppresses local generation of Joule's heat or electric discharge in the sintered metal layer even after it is repetitively used for extended periods of time in the latest apparatus for producing a semiconductor, and exhibits stable performance for extended periods of time.

(Brief Description of the Drawings)

Fig. 1 is a partly cut-away perspective view illustrating an aluminum nitride junction body of the invention;
Fig. 2 is a side sectional view of the aluminum nitride junction body of Fig. 1; and
Fig. 3 is a view of concept illustrating how to measure the warping of a sintered metal layer.

(Best Mode for Carrying Out the Invention)

The invention will now be described in detail with reference to the drawings, but it should be noted that the embodiment of the invention is in no way limited to the one that is shown in the drawings.

(Aluminum nitride junction body)

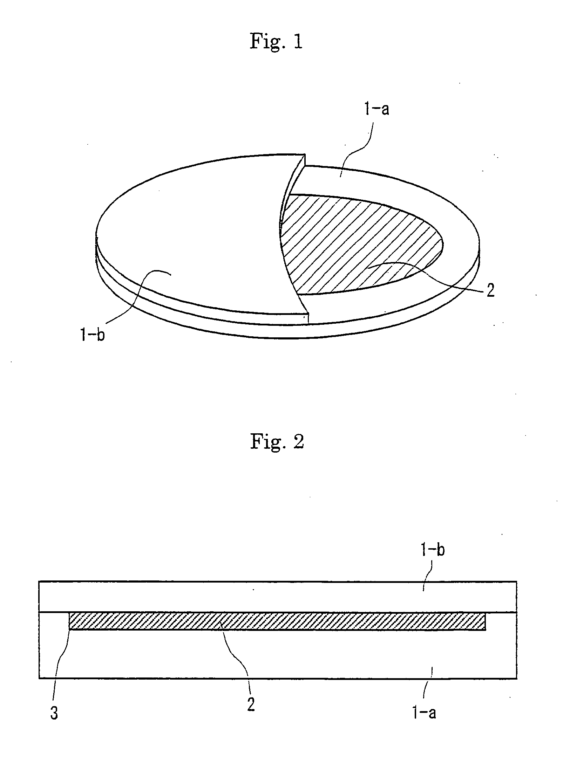

In Figs. 1 and 2, the AlN junction body of the invention is obtained by joining two pieces of aluminum nitride (AlN) sintered plates 1-a and 1-b together, and a sintered metal layer 2 is formed on the junction interface. Though not illustrated, a via-hole conductor is usually provided in, for example, the sintered plate 1-a by charging an electrically conducting paste into the through hole, and an electric current is fed to the sintered metal layer 2 through the via-hole conductor.

The AlN sintered plates 1-a and 1-b, usually, have a thickness of 1 to 100 mm and, preferably, 5 to 50 mm. The two pieces of AlN sintered plates may have the same thickness. When used as an electrostatic chuck, however, it is desired that the AlN sintered plate 1-b has a small thickness to work as a dielectric layer on the side of the wafer-placing surface (on the side of the adsorbing surface) and the other AlN sintered plate 1-a has a large thickness to maintain strength. In particular, the AlN sintered plate 1-b working as a dielectric layer has a thickness of about 1 to about 20 mm.

Further, when used as, for example, an electrostatic chuck, the AlN sintered plates, usually, have a circular shape on a plane.

In the present invention, the sintered metal layer 2 forms a circuit pattern of electrodes in the use of the electrostatic chuck, and may exist simply as a solid pattern as shown in Fig. 1 or may exist as a linear pattern.

The sintered metal layer 2 is formed by sintering a powder of a high-melting metal such as tungsten or molybdenum. That is, if the sintered metal layer 2 is formed by using a low-melting metal, the metal may diffuse into the AlN sintered plate during the sintering causing the AlN sintered plate to possess a decreased volume resistivity (decreased dielectric constant). Further, the low-melting metal flows into the whole junction interface of the AlN sintered plate, and an electric current may leak to the external side when it is used as the electrostatic chuck. Therefore, the sintered metal layer 2 is formed by using tungsten or molybdenum which is a high-melting metal.

The area ratio of the sintered metal layer 2 that occupies the junction surface is, desirably, in a range of 50 to 90% and, particularly, 60 to 80% from the standpoint of holding the whole back surface of the wafer by adsorption. When the sintered metal layer 2 is formed maintaining a high area ratio, warping tends to occur. According to the present invention, however, the warping is effectively suppressed as will be described later.

The thickness of the sintered metal layer 2 should lie in a range of 15 to 100 μm and, particularly, 20 to 90 μm. That is, when the thickness of the sintered metal layer 2 is smaller than 15 μm, it becomes difficult to lower the sheet resistivity to a sufficient degree. When the thickness exceeds 100 μm, on the other hand, the effect is not enhanced any more for improving the sheet resistivity and, besides, it becomes difficult to suppress the warping. Further, the sintered metal layer 2 is thickly formed as described above and is buried in the recessed portion 3 formed in the AlN sintered plate 1-a.

The AlN junction body of the invention is produced by a method that will be described later and exhibits excellent properties that could not be obtained by the conventional counterparts. That is, the sintered metal layer 2 has a low sheet resistivity. Despite the sheet resistivity is low and, further, despite the sintered metal layer 2 is thick having a high area ratio, the warping can be effectively suppressed. Besides, the junction strength is great between the sintered metal layer 2 and the AlN sintered plate 1-b on the junction surface.

For example, the sheet resistivity of the sintered metal layer 2 can be lowered to some extent by increasing the thickness thereof but faces the limitation. According to the present invention as will be described later, however, the sintered metal layer 2 is formed through firing by using an electrically conducting paste containing a metal (W or Mo) powder of a small particle size and, hence, exhibits a sheet resistivity of not larger than 1 $\Omega/\square$ and, particularly, not larger than $1 \times 10^{-1}$ $\Omega/\square$, which is very highly conductive. The lower limit of the sheet resistivity is determined by the theoretical resistivity of a high-melting metal constituting the sintered metal layer 2 and the thickness of the layer and is, usually, $1 \times 10^{-3}$ $\Omega/\square$.

Further, when the sintered metal layer is formed by using the electrically conducting paste containing a metal powder of a small particle size as described already, the sintered metal layer tends to be warped to a large degree. Besides, the sintered metal layer 2 tends to be warped to a large degree even when the thickness of the sintered metal layer 2 is increased or the area ratio thereof is increased. In the present invention in which the two pieces of AlN sintered plates 1-a and 1-b are joined together by using a predetermined adhesive and through the two steps of sintering as will be described later, the warping of the sintered metal layer 2 can be suppressed to a large extent.

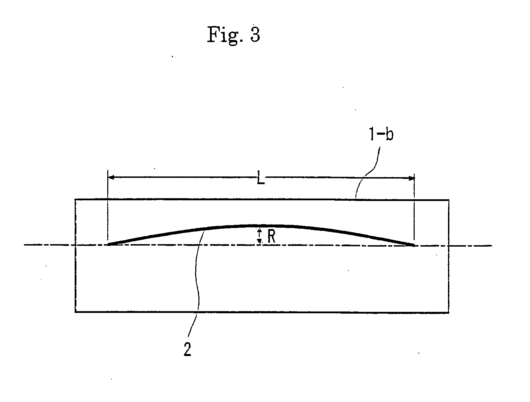

Referring to Fig. 3, a maximum distance R ($\mu$m) of the sintered metal layer 2 is measured from a straight line (dot-dash chain line) connecting two end points of the sintered metal layer 2 on a cross section intersecting the sintered metal layer 2 at right angles, and the warping (W) of the sintered metal layer 2 is calculated from the maximum distance R and the length L (mm) between the end points according to the following formula,

$$W \ (\mu m/100 \ mm) \ = \ (R/L) \ x \ 100$$

In the AlN junction body of the present invention, the warping of the sintered metal layer 2 calculated according to the above formula is not larger than 100 $\mu$m/100 mm and, particularly, not larger than 70 $\mu$m/100 mm. Though there have heretofore been proposed AlN sintered bodies that have been suppressed from warping to some extent, their sheet resistivities are about 3 Q/D after all, and are not satisfactory for being used as the electrostatic chuck. The AlN sintered body of the present invention had not at all been known so far, suppressing the warping to a very small degree despite of its very low sheet resistivity (not higher than 1 $\Omega/\square$.

In the present invention, further, the junction strength is very high between the sintered metal layer 2 and the AlN sintered plate 1-b on the junction surface. The junction strength can be evaluated in terms of a shear strength measured by using a die shear tester. The AlN junction body of the present invention exhibits a shear strength between the sintered metal layer 2 and the AlN sintered plate 1-b of not smaller than 4.0 kg/mm$^2$ and, particularly, in a range of 5.0 kg/mm$^2$ to 8.0 kg/mm$^2$ as demonstrated in Examples appearing later. That is, to avoid oxidation of the metal, the sintered metal layer is formed through firing in a carbon furnace resulting in the formation of a carbide on the surface of the sintered metal layer. Therefore, the conventional AlN junction bodies have a low junction strength between the sintered metal layer and the AlN sintered plate. According to the method of the present invention that will be described later, however, formation of carbide on the surface of the sintered metal layer is effectively prevented, and a high shear strength is exhibited as described above.

(Production of the aluminum nitride junction body)

The AlN junction body of the present invention is produced by, first, providing two pieces of aluminum nitride sintered plates that have been prepared in advance, forming a recessed portion, charging an electrically conducting paste into the recessed portion, forming an adhesive layer, effecting the dewaxing, and joining the two plates together through the sintering in two steps.

<Aluminum nitride sintered plates>

The AlN sintered plates usually contain a sintering assistant in an amount of not larger than 1% by weight and, preferably, not larger than 0.5% by weight, and are desirably joined together maintaining reliability through the firing at a temperature that will be described later. As described earlier, further, the AlN sintered plates to be joined together may have the same thickness or different thicknesses.

Though there is no particular limitation on the method of producing the AlN sintered plates, it is a widely employed practice to add together 100 parts by weight of an AlN powder, 2 to 5 parts by weight of an organic binder such as an acrylic binder, and, as required, 0.3 to 1.0 part by weight of a dispersant such as a long-chain hydrocarbon ether dispersant, and 10 to 20 parts by weight of a dispersant such as ethanol, mixing them together to prepare a slurry thereof, forming the slurry into a plate, decomposing and removing the organic binder (dewaxing) and, then, firing the plate to produce the AlN sintered plates.

To carry out the forming, the slurry is granulated by using, for example, a spray drier, the granulated powder is molded in a metal mold and is, then, formed by a cold isostatic press method. It is desired that the dewaxing is conducted in the air at 550 to 650°C, and the firing is conducted in a nitrogen atmosphere at 1850 to 1900°C.

The surface of the sintered plate obtained as described above is ground such that the surface roughness Ra (average roughness) is not larger than 0.8 $\mu$m for strongly joining the sintered metal layer that will be described later and the aluminum nitride, as well as for strongly joining the aluminum nitride sintered plates together.

<Step of forming a recessed portion>

The recessed portion 3 is formed in a range (pattern) where the sintered metal layer 2 is to be made present in the surface (junction surface) of one of the aluminum nitride sintered plates obtained by the method described above. It is desired that the recessed portion 3 is formed in the surface of the sintered plate having a large thickness (aluminum nitride sintered plate represented by 1-a in Fig. 1) among the two pieces of the aluminum nitride sintered plates. The depth of the recessed portion 3 is determined depending upon the thickness of the sintered metal layer 2 that is to be formed and is set in a range of, for example, 15 to 100 $\mu$m.

The recessed portion 3 can be formed by a known method such as sand blast, machining, etc.

<Step of charging the electrically conducting paste>

Next, the electrically conducting paste is charged into the recessed portion 3 to form the sintered metal layer 2. That is, the electrically conducting paste contains a tungsten powder or a molybdenum powder (hereinafter simply referred to as metal powder) as a conductor component. It is important that the metal powder is a fine powder having a volume-based average particle size ($D_{50}$) of not larger than 3.5 $\mu$m and, preferably, 1 to 3 $\mu$m as measured by, for example, a laser diffraction/light scattering method. Use of the fine metal powder makes it possible to increase the density of the sintered metal layer 2 and to decrease the sheet resistivity to lie within the above-mentioned range. If the average particle size exceeds 3.5 $\mu$m, it becomes difficult to increase the density of the sintered metal layer 2; i.e., voids form in the sintered metal layer 2, and the sheet resistivity increases.

It is desired that the above metal powder contains coarse particles having diameters of not smaller than 10 $\mu$m in an amount of not larger than 1%. If coarse particles exist in large amounts, many voids remain in the sintered metal layer 2 often permitting abnormal electric discharge to take place in the sintered metal layer 2.

It is further desired that the above metal powder has a BET specific surface area of not smaller than 0.1 $m^2$/g and, particularly, in a range of 0.1 to 1.3 $m^2$/g. If the specific surface area is smaller than the above range, the contact areas decrease among the metal particles, whereby the sintering is not favorably accomplished and voids tend to remain in the sintered metal layer 2.

The above electrically conducting paste is prepared by known means, such as mixing the metal powder with a solvent like a terpineol and, as required, with a dispersant like an ethyl cellulose. Usually, the solvent is used in an amount of 12 to 18 parts by weight and the dispersant is used in an amount of about 1 to 5 parts by weight per 100 parts by weight of the metal powder. The electrically conducting paste is charged into the recessed portion 3, usually, by coating, screen-printing or the like method.

It is desired that the electrically conducting paste is charged in an amount, calculated as a solid component after drying, of 1.05 to 1.5 times as great and, preferably, 1.1 to 1.3 times as great as the volume of the recessed portion 3. Namely, the electrically conducting paste containing the metal powder of small particle sizes shrinks to a conspicuous degree. Charging in an amount slightly greater than the volume of the recessed portion 3 relaxes the shrinking and more favorably prevents the obtained AlN junction body from warping.

<Step of forming the adhesive layer>

In the present invention, it is important that the electrically conducting paste is charged into the recessed portion 3 in the AlN sintered plate 1-a followed by drying, and the adhesive paste containing the aluminum nitride as an adhesive component is applied onto the whole surface (junction surface) of the AlN sintered plate 1-a inclusive of the paste-charged surface, to thereby form the adhesive layer. That is, according to the conventional method of production, the electrically conducting paste (metal powder) is fired to form the sintered metal layer 2 and, then, the adhesive layer is formed to join the AlN sintered plate. According to the present invention, on the other hand, the adhesive layer is formed prior to firing the electrically conducting paste, and the AlN sintered plate 1-b is stuck in a state where the adhesive layer has been formed and has been sintered.

When the sintered metal layer 2 is formed by using an electrically conducting paste containing a metal powder of fine particle sizes as a conductor component and by firing the electrically conducting paste (metal powder) as described already, the shrinking occurs to a large extent at the time of firing causing the sintered metal layer 2 to be warped to a large extent. The sintered metal layer 2 that is warped to a large extent makes it difficult to subsequently conduct the junction of the AlN sintered plate 1-b. Even if it were joined, the obtained junction body retains the warping. According to the present invention, on the other hand, a gap forming in the junction interface due to the shrinking of when the metal powder in the electrically conducting paste is fired, is compensated by the adhesive layer, making it possible to effectively suppress the warping.

Further, the adhesive layer is highly wettable for the AlN sintered plate and can be integrated with the AlN sintered plate through the sintering that will be described later. Therefore, the AlN sintered plates can be joined together more strongly. Besides, in the present invention, the electrically conducting paste is sintered in a state where the adhesive layer is formed making it possible to greatly enhance the junction strength between the sintered metal layer 2 and the AlN sintered plate 1-b. Namely, the electrically conducting paste is fired in a reducing atmosphere for preventing the metal powder and the AlN sintered body from being oxidized; i.e., the electrically conducting paste is fired in, for example, a carbon furnace. Therefore, if the electrically conducting paste is fired in a state where the adhesive layer is not existing, the metal powder can be prevented from being oxidized, but the surface of the obtained sintered metal is transformed into a carbide thereof resulting in a decrease in the junction strength between the AlN sintered plate 1-b and the sintered metal layer 2. According to the present invention, on the other hand, the adhesive layer that is formed on the electrically conducting paste serves as a protection layer suppressing the surface of the sintered metal layer 2 from being transformed into a carbide thereof, enhancing the junction strength between the sintered metal layer 2 and the AlN sintered plate 1-b, and making it possible to increase the shear strength to lie, for example, in the above-mentioned range.

In the present invention, the adhesive paste used for forming the above adhesive layer is prepared by mixing the aluminum nitride powder, a solvent such as a terpineol and, as required, a dispersant such as an ethyl cellulose like the above-mentioned electrically conducting paste. The amounts of blending the solvent and the dispersant may be in the same ranges as those of the above electrically conducting paste. It is desired that the AlN powder that is used has fine particle sizes like the above-mentioned metal powder from the standpoint of preventing the warping, the average particle size ($D_{50}$) thereof being not larger than 3.5 $\mu$m and, particularly, in a range of 1 to 3 $\mu$m, and the content of coarse particles having particle sizes of not smaller than 10 $\mu$m therein being not larger than 1%. Such fine AlN particles are very advantageous for exhibiting a high anchoring effect for the surface of the sintered metal layer 2 or for the surface of the AlN sintered plate to obtain a large junction strength.

By using the adhesive paste, the adhesive layer is formed by coating or by printing like when the electrically conducting paste is charged. The thickness of the adhesive layer is preferably 10 to 100 $\mu$m.

<Dewaxing step>

In the present invention, the electrically conducting paste and the adhesive layer (adhesive paste) are dewaxed after the adhesive layer is formed on the whole junction surface of the AlN sintered plate 1-a.

The dewaxing is conducted under the conditions of a nitrogen atmosphere, at a temperature of 850 to 950˚C and, preferably, 880 to 930˚C, usually, for about 2 to 5 hours.

<Steps of sintering>

In the present invention, after the above dewaxing, another AlN sintered plate 1-b is laminated on the junction surface of the AlN sintered plate 1-a on which the adhesive layer has been formed having been dewaxed, and the sintering is effected in two steps, i.e., a primary sintering and a secondary sintering.

In the step of the primary sintering, first, the heat treatment is conducted while press-contacting the AlN sintered plate 1-b under a pressure of 0.5 to 30 MPa and, particularly, 1 to 10 MPa at a temperature of 1600 to 1700˚C and, particularly, 1650 to 1700˚C for 0.5 to 4 hours and, particularly, 1 to 2 hours.

In the subsequent step of the secondary sintering, the AlN sintered plate 1-b is heat-treated in a state of being press-contacted at a temperature of 1800 to not higher than 1900˚C, particularly, 1850 to 1890˚C for 2 to 8 hours and, particularly, 4 to 6 hours.

Due to the sintering in two steps, the metal powder (W powder or Mo powder) in the electrically conducting paste and the AlN powder in the adhesive layer are sintered, and the AlN junction body of the invention is obtained having the above-mentioned properties.

That is, in the present invention, the sintering is effected in two steps and, hence, the metal particles are gradually sintered. Accordingly, the shrinking does not proceed at one time. Gaps formed in the junction interface due to the shrinking are filled with the AlN particles in the adhesive layer, and the warping is effectively suppressed being filled with the AlN particles. Due to the heating in the step of the primary sintering, further, the sintered body particles that are in contact are weakly joined together to false-secure the AlN sintered plate 1-b. In this state, the step of the secondary sintering is effected to form a strong junction. Namely, a large shrinking in the step of the secondary sintering is suppressed by the AlN sintered plate 1-b that is false-secured, and it is estimated that the warping of the sintered metal layer 2 is suppressed even by the suppression of shrinking.

Further, since the sintering is effected in two steps in the presence of the adhesive layer containing the AlN fine powder, not only the AlN sintered plates are joined together but also the junction surface between the sintered metal layer 2 and the AlN sintered plate 1-b becomes dense without gaps owing to the anchoring effect of the adhesive layer, and a large junction strength is maintained.

For example, when the sintering is effected by elevating the temperature at one time up to the temperature of the step of the secondary sintering without effecting the primary sintering, the metal powder shrinks (i.e., the sintered metal layer 2 shrinks) at one time causing the sintered metal layer 2 and the obtained junction plate to be greatly warped. When the heating time in the step of the primary sintering is shorter than the above range, too, a similar problem arouses. When the temperature in the step of primary sintering is lower than the above range, the result is the same as when the primary sintering is not effected. When the time of the step of the primary sintering is longer than the above range, the metal (W or Mo) in the sintered metal layer 2 diffuses into the AlN sintered plates 1-a and 1-b, whereby the sintered metal layer 2 is unevenly distributed, and the obtained junction body is not suited for use, particularly, as an electrostatic chuck.

When the temperature of the step of the secondary sintering is lower than the above range, the AlN sintered plate 1-b is not joined. When the temperature of the step of the secondary sintering is higher than the above range, too, the metal in the sintered metal layer 2 diffuses into the AlN sintered plate, whereby the sintered metal layer 2 is unevenly distributed and warps to a large extent causing the junction body itself to be greatly warped. When the temperature of the step of the secondary sintering is lower than the above range, the sintered metal layer 2 does not become dense and the sheet resistivity increases. Further, when the time of the step of the secondary sintering is shorter than the above range, the junction becomes insufficient, and peeling easily occurs in the junction interface. When the time of the step of the secondary sintering is longer than the above range, the warping increases.

When the pressure acting on the junction surfaces of the AlN sintered plates is smaller than the above range throughout the heating in the step of the primary sintering and in the step of the secondary sintering, the junction force decreases. When the pressure is too strong, on the other hand, the sintered plates are broken and the yield decreases.

The step of the primary sintering and the step of the secondary sintering are conducted in a reducing atmosphere containing carbon to prevent the sintered metal and AlN from being oxidized. In the present invention, however, the adhesive layer is formed on the electrically conducting paste that forms the sintered metal layer 2 in the step of sintering, making it possible to effectively avoid the surface of the sintered metal layer 2 from being transformed into a carbide thereof by the firing in a carbon atmosphere. Upon preventing a drop in the junction force due to the transformation into a carbide, the AlN junction body of the present invention features a high junction force between the sintered metal layer 2 and the AlN sintered plate 1-b, and exhibits a very high shear strength.

The thus obtained AlN junction body of the invention is effective particularly as an electrostatic chuck but can also be used in other applications, such as a heater (the sintered metal layer 2 works as a heat-generating plate).

The AlN junction body of the present invention can be used as an electrostatic chuck maintaining its structure in which the sintered metal layer is held between the two pieces of AlN sintered plates as shown in Fig. 1. To the above junction body can be further joined another AlN sintered plate interposing another sintered metal layer therebetween to obtain a junction body of a three-layer structure by joining three pieces of AlN sintered plates. The above junction may be further repeated to obtain a junction body of a multi-layer structure. Further, by regarding the junction body of a structure in which the sintered metal layer is sandwiched between the two pieces of AlN sintered plates as a unit, many units of junction bodies may be joined together to use a junction body of a multi-layer structure.

(Examples)

The effects of the invention will be described in further detail by way of Examples and Comparative Examples.

Properties of the AlN junction bodies appearing in the following Examples were measured in a manner as described below.

<Warping of the sintered metal layer>

A disk-like junction body is divided into four. A distance to the sintered metal layer from a line connecting two end points of the sintered metal layer is measured by using a digital measure-scope on each cross section to find a maximum value R thereof. The warping W is calculated according to the following formula,

$$W \ (\mu m/100 \ mm) \ = \ (R/L) \ x \ 100$$

where L is a distance between the two end points.

<Sheet resistivity>

One surface of the AlN sintered plate of the AlN junction body is ground until the sintered metal layer therein appears, and the sheet resistivity of the sintered metal layer that has appeared is measured relying on a four probe method.

<Shear strength>

A shear strength between the sintered metal layer and the AlN sintered plate on the junction interface is measured by using a die shear tester.

<Adsorbing force and evaluation of durability>

One surface of the AlN sintered plate of the AlN junction body is so ground that the thickness from the sintered metal layer is 0.8 mm thereby to form a dielectric layer, a hole of a diameter of 5 mm is formed up to the sintered metal layer in the center of the AlN sintered plate on the opposite side, and a lead wire is connected thereto so that a DC voltage can be applied. The junction body is set in a vacuum chamber, a silicon wafer which is grounded is placed on the surface of the dielectric layer, the pressure in the chamber is decreased down to 10 mTorr, the silicon wafer is pulled up while applying a voltage of 1.5 kV to the sintered metal layer at room temperature, and the strength of when it is removed is regarded as an adsorbing force.
The durability is evaluated in a manner of applying a DC voltage of 3 kV to the sintered metal layer for 10 seconds repetitively 100 times to confirm the occurrence of dielectric breakdown of the dielectric layer.

<Junction state of the AlN sintered plates>

The junction body is cut from the center thereof toward the outer side maintaining an angle of 90 degrees to obtain four cut surfaces. The interface between the aluminum nitride sintered plates on the cut surfaces is continuously photographed by using a scanning electron microscope (SEM) at a magnification of 600 times. Then, based on the photographs, the total number V of voids of lengths of not shorter than 10 $\mu$m in the junction interface is found, and the number of voids within the length of 100 mm is found according to the following formula, and the junction state of the AlN sintered plates is evaluated on the following basis:

```
Number of voids within the length of 100 mm =
(V/D) x 100 where D is a length (mm) of the
region observed by using the SEM.
```

Evaluation:

○: Number of voids within the length of 100 mm is smaller than 5 (junction state is favorable).
×: Number of pores within the length of 100 mm is not smaller than 5 (junction state is not favorable).

In Example, there were used the following AlN sintered plates, W powder and Mo powder for forming the sintered metal layer, and AlN powder for forming the adhesive paste. The average particle size is the volume-based diameter ($D_{50}$) measured based on a laser diffraction/light scattering method.

<AlN sintered plates (disks)>

SH-50 manufactured by Tokuyama Co.

Diameter: 215 mm
Thickness: 12 mm
Y Content (sintering assistant): 0.02% by weight
Surface roughness Ra: 0.4 $\mu$m

<W Powder>

C30 manufactured by Allied Material Co.

Average particle size: 2.2 µm
Content of coarse particles (particle sizes of not smaller than 10 µm): 5.0% by weight or less

<Mo Powder>

TMO-20 manufactured by Tokyo Tungsten Co.

Average particle size: 2.2 µm
Content of coarse particles (particle sizes of
not smaller than 10 µm): 5.0% by weight or less

<AlN Powder>

Grade H manufactured by Tokuyama Co.

Average particle size: 1.5 µm
Content of coarse particles (particle sizes of
not smaller than 10 µm): 5.0% by weight or less

(Example 1)

A recessed portion of a depth of 40 µm was formed by sand blasting in one surface of the AlN sintered plate leaving a width of 10 mm from the outer circumference thereof. Then, to the W powder were added an ethyl cellulose (Etocell manufactured Nisshin Kasei Co.) as a dispersant and a terpineol (manufactured by Yasuhara Chemical Co.) as a solvent thereby to prepare an electrically conducting paste. The electrically conducting paste possessed a composition of 100 parts by weight of the W powder, 2.1 parts by weight of the dispersant, and 15.7 parts by weight of the solvent.
The electrically conducting paste was charged into the recessed portion by a screen-printing method, and the AlN sintered plate was dried in a drier at 80˚C for 30 minutes. The volume of solid component of the paste after drying was 1.3 times as great as the volume of the recessed portion.
Next, to the AlN powder were added the ethyl cellulose and the terpineol to prepare an adhesive paste. The adhesive paste possessed a composition of 100 parts by weight of the AlN powder, 3 parts by weight of the dispersant and 70 parts by weight of the solvent.
The adhesive paste was applied by screen-printing onto the whole surface of the AlN sintered plate onto which the electrically conducting paste has been printed, thereby to form an adhesive layer having a thickness of about 20 µm. Thereafter, the adhesive layer was dried at 80˚C for 30 minutes and was, then, dewaxed in an electric furnace at 900˚C for 2 hours.
Next, the AlN sintered plate in which no recessed portion has been formed was placed on the surface of the adhesive layer on the above AlN sintered plate, secured by using a sample jig made of carbon, and was put into a hot-pressing furnace. Then, the AlN sintered plates were subjected to the primary sintering while being applied with a load of 8.6 tf (pressure of 2.4 MPa) in a carbon-containing nitrogen stream at 1650˚C for 2 hours, and was, then, subjected to the secondary sintering while elevating the temperature up to 1850˚C at a rate of 10˚C /min. and maintaining this temperature for 4 hours. After cooled down to room temperature, the AlN junction body was taken out from the furnace. The conditions for producing the AlN junction body were as shown in Table 1.
The obtained AlN junction body was measured for its properties by the methods described above. The results were as shown in Table 2.

(Examples 2 to 9)

AlN junction bodies were produced in the same manner as in Example 1 but changing the depth of the recessed portion, amount of charging the electrically conducting paste into the recessed portion and the sintering conditions as shown in Table 1. The obtained AlN junction bodies were measured for their properties in the same manner as in Example 1. The results were as shown in Table 2.

(Example 10)

An AlN junction body was produced in the same manner as in Example 1 but using the Mo powder instead of the W powder and under the conditions shown in Table 1. The obtained AlN junction body was measured for its properties in the same manner as in Example 1. The results were as shown in Table 2.

(Comparative Examples 1 to 4)

AlN junction bodies were produced in the same manner as in Example 1 but changing the depth of the recessed portion, amount of charging the electrically conducting paste into the recessed portion and the sintering conditions as shown in Table 1. The obtained AlN junction bodies were measured for their properties in the same manner as in Example 1. The results were as shown in Table 2.
In Comparative Example 3, the AlN sintered plate was easily peeled off due to a shock, and the adsorbing force and the durability could not be evaluated.

(Comparative Example 5)

An AlN junction body was produced in the same manner as in Example 1 but using the W powder having an average particle size of 5.1 $\mu$m and containing coarse particles (having particle sizes of not smaller than 10 $\mu$m) in an amount of 15% by weight. The obtained AlN junction body was measured its properties in the same manner as in Example 1. The results were as shown in Table 2.

(Comparative Example 6)

The electrically conducting paste was charged into the recessed portion of the AlN sintered plate in the same manner as in Example 1 but changing the amount of charging the electrically conducting paste into 1.1 times as great as the volume of the recessed portion. Next, the electrically conducting paste was dewaxed at 900°C for 2 hours, and was heated at 1750°C for 3 hours to form the sintered metal layer. Here, the AlN sintered plate has warped by 580 $\mu$m/ 100 mm.
Next, the adhesive paste was applied onto the whole surface where there was existing the sintered metal layer of the AlN sintered plate in the same manner as in Example 1, and the AlN sintered plate having no recessed portion was placed on the adhesive layer, secured by the sample jig made of carbon, and was introduced into the hot-pressing furnace. Then, the AlN sintered plates were maintained at 1650°C in a nitrogen stream for 2 hours while being applied with a load of 8.6 tf (pressure of 2.4 MPa), and the temperature was elevated up to 1850°C at a rate of 10°C /min. The AlN sintered plates were maintained at this temperature for 4 hours. After cooled down to room temperature, the AlN junction body was taken out from the furnace. The obtained AlN junction body was measured for its properties in the same manner as in Example 1. The results were as shown in Table 2.
In the durability testing, the AlN junction body permitted an electric current to leak from the junction interface when the voltage was applied 8 times, and the voltage could not be applied thereafter.

Table 1

| | Metal | Metal particle size | Depth of recess (μm) | Volume ratio of solid paste component to volume of recess | Firing of metal layer before junction | Primary sintering temperature (°C) | Primary sintering time (hrs) | Secondary sintering temperature (°C) | Secondary sintering time (hrs) | Pressure (MPa) |
|---|---|---|---|---|---|---|---|---|---|---|
| Ex.1 | W | 2.2 | 40 | 1.3 | no | 1650 | 2 | 1850 | 4 | 2.4 |
| Ex.2 | W | 2.2 | 40 | 1.2 | no | 1600 | 2 | 1850 | 4 | 2.4 |
| Ex.3 | W | 2.2 | 40 | 1.3 | no | 1700 | 2 | 1850 | 4 | 2.4 |
| Ex.4 | W | 2.2 | 40 | 1.2 | no | 1650 | 2 | 1800 | 4 | 2.4 |
| Ex.5 | W | 2.2 | 40 | 1.2 | no | 1650 | 2 | 1900 | 4 | 2.4 |
| Ex.6 | W | 2.2 | 40 | 1.3 | no | 1650 | 2 | 1850 | 4 | 2.4 |
| Ex.7 | W | 2.2 | 20 | 1.2 | no | 1650 | 2 | 1800 | 4 | 2.4 |
| Ex.8 | W | 2.2 | 80 | 1.1 | no | 1650 | 2 | 1900 | 4 | 2.4 |
| Ex.9 | W | 2.2 | 40 | 1.1 | no | 1650 | 2 | 1850 | 4 | 4.0 |
| Ex.10 | Mo | 2.2 | 40 | 1.2 | no | 1600 | 2 | 1800 | 4 | 2.4 |
| Comp.Ex.1 | W | 2.2 | 5 | 1.1 | no | 1600 | 2 | 1800 | 4 | 2.4 |
| Comp.Ex.2 | W | 2.2 | 120 | 1.1 | no | 1650 | 2 | 1850 | 4 | 2.4 |
| Comp.Ex.3 | W | 2.2 | 40 | 1.2 | no | 1650 | 2 | 1750 | 4 | 2.4 |
| Comp.Ex.4 | W | 2.2 | 40 | 1.2 | no | 1650 | 2 | 1950 | 4 | 2.4 |
| Comp.Ex.5 | W | 5.1 | 40 | 1.3 | no | 1650 | 2 | 1850 | 4 | 2.4 |
| Comp.Ex.6 | W | 2.2 | 40 | 1.1 | yes[*1] | 1650 | 2 | 1850 | 4 | 2.4 |

*1) Fired at 1750°C for 3 hours.

## Table 2

| | Junction state | Thickness of sintered metal layer (μm) | Warping of sintered metal layer (μm)/100mm | Sheet resistance of sintered metal layer $\Omega/\square$ | Adsorbing force (g/cm$^2$) | Durability (dielectric breakdown) | Shear strength (kg/mm$^2$) |
|---|---|---|---|---|---|---|---|
| Ex.1 | ○ | 40 | 30 | $4.1 \times 10^{-3}$ | 230 | no | 6.5 |
| Ex.2 | ○ | 40 | 29 | $4.0 \times 10^{-3}$ | 230 | no | 6.3 |
| Ex.3 | ○ | 40 | 32 | $4.1 \times 10^{-3}$ | 230 | no | 7.1 |
| Ex.4 | ○ | 40 | 25 | $4.0 \times 10^{-3}$ | 220 | no | 5.8 |
| Ex.5 | ○ | 40 | 50 | $3.8 \times 10^{-3}$ | 240 | no | 7.5 |
| Ex.6 | ○ | 40 | 30 | $4.0 \times 10^{-3}$ | 230 | no | 6.8 |
| Ex.7 | ○ | 20 | 30 | $6.0 \times 10^{-3}$ | 210 | no | 5.5 |
| Ex.8 | ○ | 80 | 50 | $3.0 \times 10^{-3}$ | 240 | no | 5.9 |
| Ex.9 | ○ | 40 | 30 | $4.0 \times 10^{-3}$ | 230 | no | 6.3 |
| Ex.10 | ○ | 40 | 29 | $4.5 \times 10^{-3}$ | 220 | no | 7.0 |
| Comp.Ex.1 | ○ | 5 | 32 | 1.2 | 29 | yes (8th time) | 1.3 |
| Comp.Ex.2 | × | 120 | 750 | 1.1 | 35 | yes (5th time) | 0.5 |
| Comp.Ex.3 | × | 40 | 42 | 3.0 | -- | -- | -- |
| Comp.Ex.4 | ○ | 40 | 620 | $4.0 \times 10^{-3}$ | 6.2 | no | 1.0 |
| Comp.Ex.5 | × | 40 | 40 | 3.3 | 13 | yes (5th time) | 0.9 |
| Comp.Ex.6 | ○ | 40 | 530 | $0.6 \times 10^{-2}$ | 50 | yes (8th time) | 1.2 |

EP 1 690 845 A1

## EP 1 690 845 A1

**Claims**

1. An aluminum nitride junction body comprising two pieces of aluminum nitride sintered plates joined to each other, and a sintered metal layer of tungsten or molybdenum formed on a junction surface thereof, said sintered metal layer having a thickness of 15 to 100 $\mu$m, wherein a sheet resistivity of the sintered metal layer is not larger than 1 $\Omega/\square$, warping of the sintered metal layer is suppressed to be not larger than 100 $\mu$m/100 mm, and a shear strength between the sintered metal layer and the aluminum nitride sintered plate on the junction surface is not smaller than 4 kg/mm$^2$.

2. An aluminum nitride junction body according to claim 1, wherein the area ratio of the sintered metal layer on the junction surface is in a range of 50 to 90%.

3. A method of producing an aluminum nitride junction body comprising the steps of:

   providing two pieces of aluminum nitride sintered plates;
   forming a recessed portion in a surface of one aluminum nitride sintered plate;
   charging an electrically conducting paste containing, as a conductor component, a tungsten powder or a molybdenum powder having an average particle size ($D_{50}$) of not larger than 3.5 $\mu$m into the recessed portion;
   forming an adhesive layer by applying an adhesive paste containing aluminum nitride as an adhesive component onto a whole surface of the aluminum nitride sintered plate charged with the electrically conducting paste;
   dewaxing the electrically conducting paste and the adhesive paste;
   effecting a primary sintering while contacting the other aluminum nitride sintered plate onto the surface where the adhesive layer is formed of the aluminum nitride sintered plate with a pressure of 0.5 to 10 MPa at a temperature of 1600 to 1700°C for 0.5 to 4 hours; and
   effecting a secondary sintering at a temperature of 1800 to 1900°C for 2 to 8 hours following the primary sintering.

4. A method of producing an aluminum nitride junction body according to claim 3, wherein the electrically conducting paste is charged into the recessed portion in an amount, calculated as a solid component, of 1.05 to 1.5 times as great as the volume of the recessed portion.

Fig. 1

1-a

1-b

2

Fig. 2

1-b

3

2

1-a

Fig. 3

**INTERNATIONAL SEARCH REPORT**

| International application No. |
| --- |
| PCT/JP2004/016352 |

A. CLASSIFICATION OF SUBJECT MATTER
Int.Cl$^7$ C04B37/00

According to International Patent Classification (IPC) or to both national classification and IPC

B. FIELDS SEARCHED

Minimum documentation searched (classification system followed by classification symbols)
Int.Cl$^7$ C04B37/00, H01L21/68

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-58631 A (Sumitomo Electric Industries, Ltd.), 25 February, 2000 (25.02.00), Claims; Par. Nos. [0059] to [0067] & EP 940845 A2 & US 2003/66587 A1 | 1-4 |
| A | JP 2002-176096 A (Toshiba Ceramics Co., Ltd.), 21 July, 2002 (21.06.02), Par. Nos. [0036], [0040] & JP 2002-173378 A Par. Nos. [0041] to [0044] | 1-4 |
| A | JP 10-273370 A (NGK Insulators, Ltd.), 13 October, 1998 (13.10.98), Claims & EP 856499 A2 & US 6261708 B1 | 3-4 |

| ☒ Further documents are listed in the continuation of Box C. | ☐ See patent family annex. |
| --- | --- |

| * Special categories of cited documents: | | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 November, 2004 (26.11.04) | 28 December, 2004 (28.12.04) |

| Name and mailing address of the ISA/ Japanese Patent Office | Authorized officer |
| --- | --- |
| Facsimile No. | Telephone No. |

Form PCT/ISA/210 (second sheet) (January 2004)

**EP 1 690 845 A1**

<table>
<tr><td colspan="3">INTERNATIONAL SEARCH REPORT</td><td>International application No.<br>PCT/JP2004/016352</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-167850 A  (NGK Insulators, Ltd.),<br>23 June, 1998 (23.06.98),<br>Claims; Par. Nos. [0056], [0058]<br>& EP 836221 A2          & US 6447626 B1 | 3-4 |

Form PCT/ISA/210 (continuation of second sheet) (January 2004)

18